# FASCICULE DE BREVET EUROPEEN

(11) **EP 0 843 124 B1**
(45) Date de publication et mention de la délivrance du brevet: **28.01.2004**
(21) Numéro de dépôt: 97402596.7
(22) Date de dépôt: 31.10.1997
(51) Int. Cl.: F17D 1/04, F15D 1/00, F16L 55/027, C09K 3/00

(54) **Procédé de transport d'un fluide dans une conduite comportant une structure poreuse**
Verfahren zum Transport eines Fluids in einer Rohrleitung die porige Struktur enthält
Process for transporting a fluid in a pipe containing a porous structure

(30) Priorité: 13.11.1996 FR 9613924
(43) Date de publication de la demande: 20.05.1998
(73) Titulaire: Institut Français du Pétrole, 92852 Rueil-Malmaison Cedex (FR)
(72) Inventeur: Rojey, Alexandre, 92500 Rueil Malmaison (FR)

(56) Documents cités:
- EP-A- 0 196 350
- FR-A- 2 076 115
- FR-A- 2 116 387
- US-A- 4 448 538
- US-A- 4 958 653
- US-A- 5 020 561
- US-A- 5 267 612

## Description

La présente invention concerne un procédé permettant de réduire les phénomènes de frottement existants entre un fluide en écoulement et la paroi d'une conduite dans laquelle il est transporté.

Elle trouve notamment son application pour le transport d'un liquide visqueux et pour le transport d'un gaz sous pression, et permet avantageusement de réduire les pertes de charge résultant notamment des phénomènes de frottement.

Elle peut être utilisée par exemple pour le transport dans une conduite d'un pétrole brut visqueux, tel qu'un pétrole lourd ou encore un pétrole brut paraffinique.

Elle trouve aussi son application pour le transport de gaz naturel sous pression qui représente un enjeu économique important et pour lequel les gazoducs intercontinentaux de transport du gaz nécessitent des investissements considérables. Le transport de gaz s'effectue en général sur des distances importantes, la pression de transport étant de l'ordre de 70 bars dans le cas d'une conduite à terre, mais pouvant atteindre environ 160 bars dans le cas d'une conduite en mer. Dans la majorité des cas, le gaz naturel transporté comporte au moins 90 % de méthane.
Les pertes de charge résultant des frottements entre le gaz en écoulement turbulent et la paroi interne du gazoduc sont importantes du fait notamment des distances élevées sur lesquelles le gaz est transporté et contribuent à une augmentation du coût de production. Il s'avère donc nécessaire de réduire ces pertes de charge.

Une façon de procéder pour compenser les pertes de charge résultant des phénomènes de frottement, consiste à installer des stations de recompression régulièrement espacées le long de la conduite et réglées pour compenser les pertes de charge. Toutefois, un tel agencement accroît sensiblement les investissements et entraîne une consommation d'énergie ainsi que des frais opératoires importants.
De plus, pour des conduites sous-marines, le procédé de recompression en cours de transport présente des difficultés de mise en oeuvre.

L'art antérieur décrit aussi l'utilisation d'additifs, tels que des polymères, qui sont ajoutés au fluide à transporter dans des proportions déterminées pour réduire ces phénomènes de frottement.
La méthode décrite dans le brevet US-4,958,653 permet de doser les additifs réducteurs de frottement à ajouter dans une conduite de transport pour augmenter le débit de gaz pour des conditions de perte de charge fixées.
L'enseignement principal de ce document repose sur une méthode mettant en oeuvre principalement les étapes suivantes : on introduit un gaz sous pression à l'intérieur d'une conduite, on injecte en un premier endroit de la conduite une quantité d'additifs, on contrôle le débit du gaz en un second point de la conduite et on ajuste la quantité d'additifs injectée au premier point jusqu'à ce que le débit de gaz mesuré au niveau du second endroit atteigne une valeur maximale.
L'additif va de plus remplir les rugosités de la paroi interne de la conduite et en minimisant les aspérités de la conduite diminuer les phénomènes de frottement.
Une telle méthode ne permet pas néanmoins de minimiser les pertes de charge pour un débit de gaz fixé.
Pour transporter un liquide visqueux, tel qu'un pétrole brut, il a été décrit une méthode consistant à ajouter un liquide moins visqueux, par exemple de l'eau, qui mis en écoulement avec le liquide de viscosité plus élevée, permet de réduire le frottement à la paroi.

Dans le cas d'un écoulement d'un gaz sous pression, il est possible de réduire la perte de charge en injectant un liquide plus visqueux que le gaz transporté, en respectant des conditions permettant de réaliser un écoulement annulaire, selon la méthode telle que décrite dans la demande FR 96/08.914.

La présente invention propose un procédé et une conduite comportant sur au moins une partie de sa longueur et/ou de son épaisseur, une structure poreuse capable au moins de retenir un fluide injecté à l'intérieur.

Le principe du procédé selon l'invention consiste à utiliser une conduite dont la structure présente sur au moins une partie de sa longueur et de son épaisseur, une certaine porosité ou encore comporte au niveau de sa paroi interne un revêtement poreux, capable de retenir dans ses pores un fluide (II) au moins partiellement immiscible avec le fluide (I) transporté. Le fluide (II) retenu dans les pores joue un effet de lubrifiant et permet de réduire les pertes de charge lors du transport du fluide (I) en écoulement dans la conduite.

La présente invention concerne un procédé de transport d'un fluide (I) dans une conduite. Il est caractérisé en ce que l'on injecte le fluide (I) à l'intérieur d'une conduite qui présente sur au moins une partie, par exemple de sa longueur et/ou de son épaisseur une structure poreuse qui comporte par exemple des pores et possède une certaine valeur un certain degré de porosité, et en ce que l'on injecte à l'intérieur de cette structure poreuse, au moins un deuxième fluide (II) qui est retenu à l'intérieur, le fluide injecté étant au moins partiellement immiscible avec le fluide (I) transporté.

La structure poreuse comporte par exemple un revêtement poreux. On injecte par exemple au moins le deuxième fluide (II) à l'intérieur de ce revêtement disposé sur au moins une partie de la paroi interne de la conduite de transport.

On injecte par exemple le deuxième fluide (II) dans la structure poreuse en un point sensiblement situé au voisinage de l'entrée de la conduite, avec un débit suffisant pour que la pression d'injection se stabilise à une valeur sensiblement voisine de la pression du fluide (I) à l'entrée de la conduite.

On injecte par exemple le fluide (II), en même temps qu'un ou plusieurs produits tels que des additifs anticorrosion et/ou antihydrates.

Selon un mode de mise en oeuvre du procédé on chauffe le second fluide (II) avant de l'injecter dans la structure poreuse.

On dispose par exemple entre la paroi interne de la conduite et le revêtement poreux, au moins un revêtement isolant thermiquement.

Selon un autre mode de réalisation on utilise au moins deux structures poreuses et on fait circuler à l'intérieur de chacune de ces structures poreuses, deux fluides de nature différentes, ces fluides étant au moins partiellement immiscibles.
Les deux structures poreuses peuvent être formées par exemple par la paroi de la conduite elle-même qui présentent par exemple deux zones présentant des valeurs de porosité différentes, ou encore correspondre à deux revêtements poreux superposés, l'un des deux étant disposé par exemple sur la surface interne de la paroi.
Selon un autre mode de réalisation, on peut concevoir un agencement composé d'une conduite ayant une structure poreuse formant la première structure poreuse et un revêtement poreux disposé sur cette première structure poreuse.

La présente invention concerne aussi une conduite pour transporter au moins un fluide (I). Elle est caractérisée en ce qu'elle comporte une structure poreuse sur au moins une partie de sa longueur et de son épaisseur, ladite structure poreuse présentant un certain degré de porosité ou valeur de porosité, permettant de retenir à l'intérieur desdits pores au moins un second fluide (II) qui est au moins partiellement immiscible avec ledit fluide (I) transporté.

La structure poreuse peut faire partie de la paroi de la conduite et/ou être formée par un ou plusieurs revêtements poreux disposés sur sa paroi interne et à l'intérieur duquel ou desquels on fait circuler des fluides de nature différentes, lesdits fluides étant au moins partiellement immiscibles.

Selon un mode de réalisation les pores de la structure poreuse disposés au voisinage de la surface interne de la structure poreuse de la conduite ou de la surface interne du revêtement poreux ont, par exemple, un diamètre inférieur à 10 microns.
Par surface interne, on désigne la surface de la paroi, par exemple, qui est au contact du gaz.

La structure poreuse est, par exemple, mouillable par le fluide (II).

Selon un mode de réalisation au moins un des revêtements poreux est un revêtement interne isolant thermiquement.

La conduite peut aussi comporter une structure poreuse formée par exemple par un tube poreux placé à l'intérieur de ladite conduite de manière à former un espace annulaire délimité par la surface interne de la paroi et par la surface externe dudit tube poreux.

Avantageusement le procédé et le dispositif selon l'invention s'applique particulièrement bien dans les cas suivants :
- le fluide (I) à transporter est un gaz sous pression et le fluide (II) imbibant la structure poreuse est un liquide,
- le fluide (I) est par exemple un gaz naturel sous pression et on utilise un fluide (II) constitué par exemple par une phase hydrocarbure liquide pour remplir la structure poreuse ,
- le fluide (I) à transporter est un pétrole brut et on utilise comme fluide remplissant les pores, une phase aqueuse,
- le fluide (I) à transporter est un liquide et on utilise un gaz pour remplir les pores.

D'autres avantages et caractéristiques de la présente invention apparaîtront mieux à la lecture de la description donnée ci-après à titre d'exemples de réalisation, dans le cadre d'applications nullement limitatives, au transport d'un gaz naturel dans une conduite, en se référant aux dessins annexés où :
- les figures 1 et 2 montrent respectivement un exemple de structure poreuse pour une conduite selon l'invention et un détail dé cette structure,
- la figure 3 schématise un système permettant la mise en oeuvre de l'invention,
- la figure 4 représente la courbe d'évolution de la pression d'injection du fluide injecté, dans la structure poreuse de la conduite,
- les figures 5A et 5B montrent la répartition du fluide injecté dans la structure poreuse,
- la figure 6 schématise un exemple de structure poreuse pour une conduite de transport,
- les figures 7 et 8 montrent respectivement un exemple de structure de conduite comportant deux revêtements poreux internes, et un système pour mettre en oeuvre le procédé selon l'invention,
- la figure 9 représente la courbe d'évolution de la pression d'injection dans le cas de deux revêtements poreux,
- la figure 10 schématise une conduite de transport dans laquelle on a inséré un tube poreux, et
- la figure 11 montre un exemple d'application du procédé selon l'invention à un puits de production.

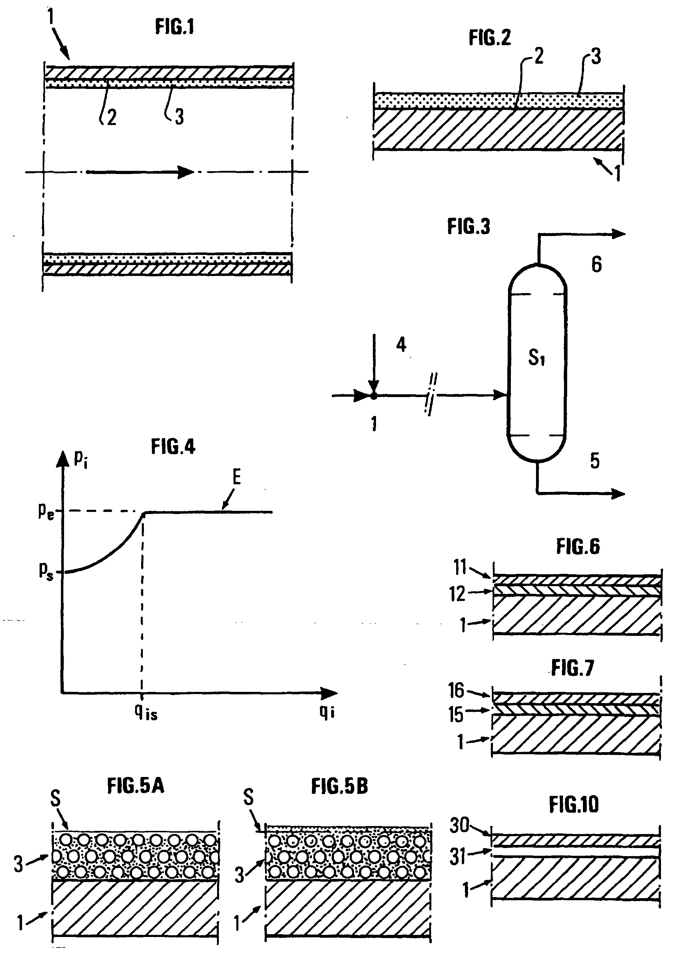

Le principe du procédé selon l'invention est décrit en relation avec la figure 1, et appliqué au transport d'un gaz sous pression qui constitue par exemple le fluide (I).
Le gaz sous pression s'écoule dans une conduite de transport ou un élément de conduite qui présente une structure poreuse et une certaine valeur de porosité ou degré de porosité. On désigne sous l'expression "structure poreuse", une conduite comportant au moins sur une partie de sa longueur et/ou de son épaisseur des pores et un degré de porosité tel que décrit ci-après ou encore un ou plusieurs revêtements poreux disposés sur la paroi interne de la conduite. Dans le cas d'une conduite poreuse, on peut délimiter ainsi une ou plusieurs zones qui présentent des valeurs de porosité différentes. L'élément de conduite 1 comporte par exemple sur sa paroi interne 2, un revêtement poreux 3, dont les pores sont au moins partiellement interconnectés de manière à communiquer les uns avec les autres.
Ce revêtement poreux est, par exemple réalisé avec un métal fritté, ou encore avec un matériau non métallique, par exemple un matériau polymère, ou encore un matériau minéral, tel qu'une silice, une alumine ou encore un silicoaluminate. Le revêtement poreux peut aussi présenter une texture de mousse qui respecte la condition d'interconnexion entre les pores.
Le diamètre interne de la conduite est, par exemple, compris entre quelques pouces et quelques dizaines de pouces. Il peut atteindre des valeurs plus élevées, par exemple comprises entre 56 et 70 pouces.
Lorsque la structure poreuse de la conduite comporte par exemple un revêtement poreux, l'épaisseur de ce revêtement est de préférence comprise entre 1 et 10 mm.
La mise en oeuvre du procédé consiste, par exemple, à injecter à l'intérieur de la structure poreuse un second ou deuxième fluide (II), par exemple un liquide non volatile, de manière à ce qu'il imbibe le revêtement, ce qui est permis notamment du fait de l'interconnexion entre les pores et donc de la circulation ou diffusion du liquide dans la majorité ou la totalité de la structure poreuse.
Le liquide injecté est par exemple constitué au moins en partie par une phase organique ayant une volatilité suffisamment réduite pour éviter une perte trop importante par vaporisation dans le gaz transporté.
Cette phase organique est constituée, par exemple par une phase hydrocarbure, telle que par exemple une fraction lourde de pétrole brut qui peut être utilisée comme base pour lubrifiant.
Cette phase hydrocarbure peut également être constituée par exemple par une fraction de condensat lorsque le fluide à transporter est un gaz à condensat.
Le liquide contenu dans les pores du revêtement poreux peut également être constitué par une phase aqueuse, de préférence une phase contenant un solvant organique pour éviter tout risque de formation d'hydrates. Ce solvant organique est, par exemple, un alcool tel que le méthanol, un glycol tel que le monoéthylène glycol ou le diéthylène glycol. Une telle solution s'applique avantageusement pour transporter un gaz initialement saturé en eau.
La structure poreuse ou le revêtement poreux est choisi de manière à être mouillé par le fluide injecté à l'intérieur des pores.

La figure 3 illustre un exemple de système permettant la mise en oeuvre du procédé selon l'invention.
Le gaz est en écoulement dans la conduite de transport 1 présentant sur au moins une partie de sa longueur une structure poreuse telle que décrite par exemple aux figures 1 et 2. L'injection du fluide, par exemple un liquide, s'effectue par un conduit 4 relié, par exemple au niveau de l'entrée de la conduite de transport 1 et de façon telle que le liquide injecté imbibe la structure poreuse.
Avantageusement la valeur du diamètre des pores est choisi pour retenir à l'intérieur un fluide, et est, de préférence, inférieur à 10 microns.
La conduite de transport 1 arrive dans un séparateur S₁, dans lequel le liquide imbibant les pores est séparé du gaz transporté, et évacué par le conduit 5 situé, par exemple, dans la partie inférieure du séparateur pour être éventuellement recyclé, par exemple, à l'entrée de la conduite de transport et/ou en tout autre endroit. Le gaz séparé est évacué du séparateur S₁ par un conduit 6 situé dans sa partie supérieure, par exemple.

Le liquide est retenu dans les pores de la structure poreuse de la conduite ou du revêtement poreux par un effet de capillarité. Tant que le débit de liquide est très faible, voire nul, la pression à l'intérieur du liquide reste voisine de la pression du gaz en sortie de la conduite de transport 1. Pour que le liquide reste à l'intérieur du milieu poreux, il est nécessaire que la pression capillaire soit supérieure à la valeur de l'écart (ΔP) entre la pression pₑ du gaz à l'entrée de la conduite de transport et la pression pₛ du gaz en sortie de la conduite.
Si la différence de pression ΔP, est par exemple d'environ 1 bar, par exemple dans le cas de l'eau à 20°C, le diamètre de pore doit être par exemple inférieur à environ 3 microns pour que le liquide soit maintenu dans le milieu poreux sans circulation.
De manière plus générale, le diamètre des pores du revêtement poreux ou de la structure poreuse de la conduite, au voisinage de la surface interne du revêtement, c'est-à-dire la surface qui est au contact du gaz transporté, est de préférence inférieur à 10 microns.

Sur la figure 4, on a schématisé la courbe d'évolution (E) de la pression d'injection de liquide pᵢ en fonction du débit d'injection qᵢ.
Si en se plaçant au départ dans des conditions telles que la pression capillaire empêche le gaz en écoulement dans la conduite de pénétrer à l'intérieur du revêtement poreux, on commence progressivement à injecter le liquide avec un débit qᵢ croissant, la pression pᵢ d'injection de liquide à l'entrée de la conduite de transport 1 suit une évolution dont l'allure est représentée par la courbe (E).
On remarque sur cette courbe qu'à partir d'une pression d'injection égale à pₛ, la valeur de pression pᵢ augmente avec le débit qᵢ, jusqu'à atteindre la valeur de la pression pₑ du gaz à l'entrée de la conduite, pour une valeur de débit liquide notée qᵢₛ ou valeur seuil sur la figure 4.
Pour une valeur de débit qᵢ supérieure à la valeur qᵢₛ, la pression pᵢₗ (pression du liquide injecté) se stabilise au niveau pₑ de la pression dans le gaz à l'entrée de la conduite de transport 1. Ceci correspond à des conditions pour lesquelles le liquide n'est plus totalement contenu dans le revêtement poreux et forme un film en écoulement sur la surface interne du revêtement poreux ou de la structure poreuse de la conduite. Le film liquide ainsi formé se trouve au voisinage du gaz transporté.
Les figures 5A et 5B schématisent deux exemples de distribution ou répartition du liquide à l'intérieur des pores.
Sur la figure 5A, on a schématisé le cas pour lequel la valeur du débit qᵢ qu'au moins une partie de ce liquide qu'au moins une partie de ce liquide de liquide injecté est inférieure à la valeur de débit qᵢₛ, dans ce cas, le liquide est contenu dans les pores.
Sur la figure 5B, on a schématisé le cas pour lequel la valeur du débit qᵢ est supérieure à la valeur seuil de débit qᵢₛ, ce qui correspond à une répartition du liquide dans la structure poreuse et à la présence d'un mince film de liquide qui se forme au-dessus de la surface interne (S) du revêtement poreux. Ce film mince est en écoulement dans la conduite.
La répartition du liquide décrite à la figure 5B est particulièrement avantageuse lorsque l'on cherche à réduire les pertes de charge survenant lors du transport d'un gaz sous pression, par exemple. La réduction des pertes de charge obtenue en procédant de cette manière peut atteindre par exemple 20 à 50% de la perte de charge totale dans une conduite ne comportant pas de revêtement poreux ou ne présentant pas de structure poreuse adaptée.
Afin de limiter le débit de liquide qᵢ, il est avantageux d'opérer avec un débit qi légèrement supérieur au débit seuil qᵢₛ, par exemple en injectant le liquide avec un débit qᵢ au moins supérieur de 20% à qᵢₛ.

La courbe d'évolution (E) de la figure 4 est, par exemple, déterminée en relevant la valeur de débit qᵢ à l'aide d'un débitmètre, et en faisant varier la pression d'injection pᵢ, mesurée à l'aide d'un capteur de pression. A partir de cette courbe, on détermine la valeur seuil qᵢₛ.

Selon un mode de réalisation de l'invention, la fraction liquide imbibant les pores est injectée avec un ou plusieurs additifs anticorrosion et/ou antihydrates, habituellement utilisés dans le domaine pétrolier. On évite ainsi la détérioration de la conduite de transport et/ou la formation de dépôts susceptibles à terme de boucher la conduite et d'empêcher le transport du fluide.
On peut aussi injecter un liquide associé à un additif destiné à favoriser la stabilité du film, par exemple des polymères stabilisants, des additifs antigel, du type glycol.
Selon un mode de mise en oeuvre du procédé selon l'invention, lorsque le fluide transporté est susceptible de former des dépôts, le procédé selon l'invention permet de faciliter le décollement de ces dépôts.
Pour cela, on opère par exemple en injectant le fluide dans la structure poreuse avec un débit qᵢ au moins supérieur à la valeur seuil qᵢₛ. En procédant ainsi, au moins une partie du fluide injecté est évacué du revêtement poreux vers l'intérieur de la conduite, ceci tout le long de la conduite qui présente une caractéristique de porosité telle que décrite précédemment, ce qui a notamment pour effet de chasser les dépôts éventuellement en train de se former sur la surface de la paroi interne de la conduite.
Dans le cas où des dépôts se sont progressivement formés et accumulés sur la paroi interne de la conduite de transport, une autre manière de procéder consiste à augmenter brusquement le débit d'injection du liquide. Cette augmentation brusque a notamment pour effet de décoller les dépôts de la paroi. On peut ensuite réduire ce débit pour revenir à des conditions de fonctionnement normal, le retour à la valeur de débit de fonctionnement normal étant réalisé après la phase de nettoyage de la surface de la paroi.

Selon un autre mode de réalisation, permettant d'éviter la formation d'hydrates, il est possible d'injecter un fluide chaud, à l'intérieur des pores, qui a pour effet d'augmenter la température du revêtement interne par exemple, ou de la structure poreuse.
La figure 6 schématise une structure permettant, notamment l'injection d'un fluide chaud. Entre la paroi 10 métallique de la conduite de transport et le revêtement poreux 11, on dispose par exemple, une couche de matériau isolant 12, dont une des fonctions est d'éviter l'échauffement de la conduite et la dissipation de la chaleur vers l'extérieur.
La couche de matériau isolant 12 est par exemple constituée d'un matériau polymère, le liquide chauffant circulant à l'intérieur du revêtement poreux.
Ce mode de chauffage agit seul et/ou est combiné, par exemple, avec d'autres modes de chauffage, par exemple électrique par effet Joule et/ou à induction.

Le procédé selon l'invention décrit précédemment est appliqué en particulier pour transporter un gaz naturel sous pression, et également pour transporter tous types de gaz sous pression dans une conduite.

Selon un autre mode de mise en oeuvre de l'invention, le procédé s'applique pour transporter un liquide visqueux ou encore un liquide susceptible d'adhérer à la paroi de la conduite, tel qu'un pétrole brut, en particulier un pétrole brut relativement lourd, ou encore un pétrole brut paraffinique, ce liquide formant le liquide (I), en utilisant un fluide (II) injecté et contenu dans le revêtement poreux qui présente comme caractéristique d'être au moins partiellement immiscible avec le liquide transporté.
Ce fluide (II) est par exemple constitué par une phase aqueuse dans le cas du transport d'un pétrole brut.
Dans ce cas, on opère selon des dispositions et des conditions analogues à celles qui ont été décrites pour le transport de gaz en relation avec les figures 1 à 6.
La conduite de transport 1 comporte, par exemple un revêtement poreux tel que celui décrit précédemment, dont les pores sont au moins partiellement en liaison les uns avec les autres, selon un des modes de réalisation précédemment décrits.
Le revêtement poreux est choisi de préférence pour être mouillé par le liquide injecté liquide, par exemple la phase aqueuse injectée par le conduit 4 avec un débit contrôlé qi et évacuée par le conduit 5 après séparation du pétrole brut dans le séparateur S₁, le pétrole brut étant évacué par la conduite 6.
L'évolution du débit d'injection suit une courbe sensiblement identique à la courbe (E) décrite à la figure 4.
Les conditions d'injection du liquide seul, par exemple la valeur du débit qᵢ ou encore associé à d'autres produits, tels que des additifs mentionnés précédemment sont par exemple sensiblement identiques aux conditions données ci-dessus. La conduite de transport présente, par exemple une structure poreuse telle que décrite précédemment.

Selon un autre mode de mise en oeuvre de l'invention, on transporte à l'intérieur de la conduite, une phase liquide, qui constitue le fluide (I) et on injecte un fluide gazeux ou fluide (II) dans la structure poreuse.
Pour transporter un pétrole brut, on utilise comme fluide (II) par exemple un gaz naturel ou une fraction d'un gaz naturel, par exemple du gaz naturel associé produit en même temps que le pétrole brut.
Il est également possible d'utiliser un autre type de gaz, tel que l'azote ou du dioxyde de carbone.
Dans ce cas, on utilise une conduite comprenant un revêtement poreux de préférence non mouillable par le liquide transporté, c'est-à-dire par exemple constitué par un matériau oléophobe dans le cas du transport d'un pétrole brut.
On opère par exemple selon un des modes de réalisation décrits sur les figures 1 à 3 et dans des conditions opératoires fixant notamment la valeur du débit qᵢ de préférence supérieure à la valeur du débit qᵢₛ, comme il a été mentionné précédemment.
Le séparateur permet de manière sensiblement identique de réaliser la séparation du liquide transporté et de la phase gazeuse injectée dans les pores.

Selon un autre mode de mise en oeuvre de l'invention, on utilise le procédé pour transporter deux fluides au moins partiellement immiscibles.
Le procédé s'applique avantageusement pour transporter deux fluides, l'un des fluides ayant un débit relativement faible par rapport au débit de l'autre fluide transporté. Dans ce cas, le procédé permet de transporter à travers le revêtement poreux ou la structure poreuse de la conduite de transport, le fluide ayant le débit volumique le plus faible.
La section de passage du revêtement poreux doit être alors sensiblement proportionnelle au débit volumique du fluide qui circule à travers ce revêtement poreux. Pour un diamètre donné, l'épaisseur de ce revêtement est donc sensiblement proportionnelle au débit du fluide qui circule à l'intérieur.
Cette disposition est particulièrement avantageuse lorsque la conduite comporte des changements de direction, des points bas, des points hauts ou encore des parties verticales. La mise en oeuvre du procédé permet avantageusement, d'éviter l'accumulation de liquide dans les points bas ou l'accumulation de gaz dans les points hauts de la conduite. On évite aussi la formation de bouchons, notamment des bouchons de taille importante susceptibles de se former en écoulement ascendant, difficiles à contrôler et qui nécessitent à l'arrivée l'utilisation de capacités de taille importante avant les installations de traitement et d'expédition pour éviter de perturber ces installations.

Le procédé selon l'invention s'applique au transport "triphasique", par exemple, celui d'un gaz contenant une fraction hydrocarbure liquide et une phase aqueuse liquide.
Dans un tel cas on opère par exemple en utilisant une conduite ou un élément de conduite ayant une structure telle que celle décrite par exemple à la figure 7.
La paroi de la conduite de transport 1 est métallique et comporte par exemple deux revêtements internes superposés, un premier poreux revêtement interne 15 qui est préférentiellement mouillable par l'eau et un second revêtement poreux 16 préférentiellement mouillable par la fraction hydrocarbure liquide.
On injecte, par exemple la phase aqueuse liquide à travers le premier revêtement poreux 15, l'eau circulant à travers les pores de ce revêtement et on injecte la fraction hydrocarbure liquide à l'intérieur des pores du second revêtement poreux.

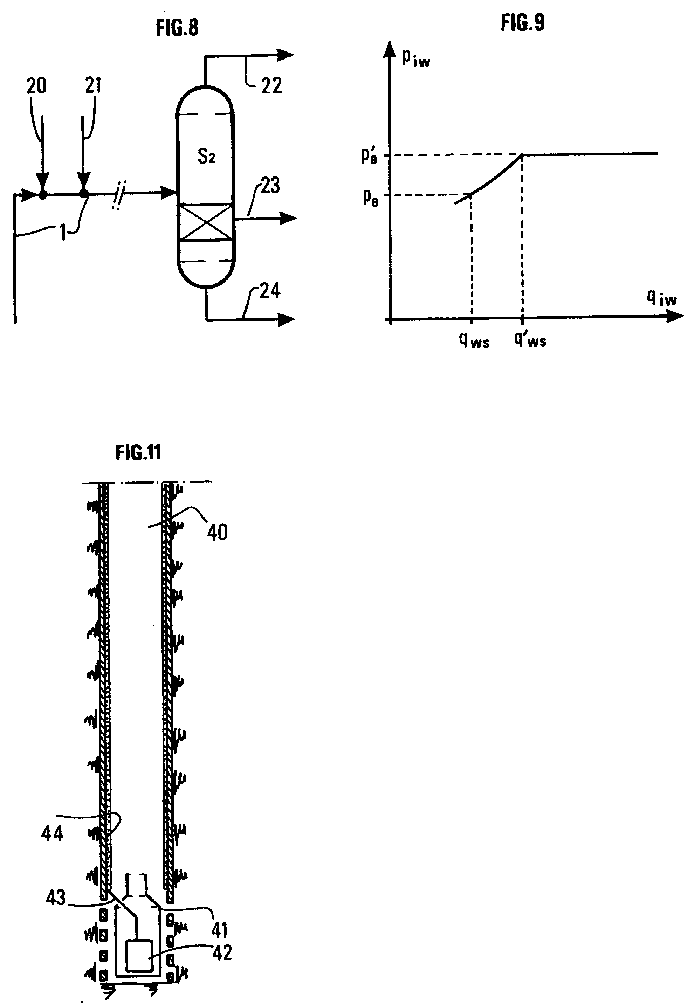

La figure 8 schématise un système permettant d'opérer de cette manière.
La conduite de transport 1 est reliée à au moins deux conduits 20 et 21 reliés respectivement au niveau aux deux revêtements poreux internes 15 et 16 (figure 7).
Le gaz étant en circulation dans la conduite de transport 1, l'eau est injectée par la conduite 15 de manière à imbiber les pores du premier revêtement 15 et la fraction hydrocarbure liquide est injectée par la conduite 21 de manière à remplir les pores du deuxième revêtement 16. Les deux fluides injectés circulent à l'intérieur des revêtements internes alors que le gaz est transporté dans la conduite 1 par exemple jusqu'à un séparateur S₂ disposé à l'arrivée de la conduite.
Au niveau du séparateur, les trois fluides ou phases sont séparés, la phase gazeuse la plus légère étant évacuée par une conduite 22 située dans la partie supérieure du séparateur, l'eau étant la phase la plus lourde étant évacuée par une conduite 24 disposée au fond du séparateur S₂, alors que la fraction hydrocarbure liquide séparée est évacuée par une conduite 23 située au-dessus de la conduite 24.

Dans ce cas, la pression d'injection pᵢₕ de la phase hydrocarbure liquide suit une évolution sensiblement identique à celle de la courbe (E) représentée sur la figure 4 et il peut être avantageux de se placer à une valeur de débit légèrement supérieure à la valeur de la pression pₑ du gaz en entrée de la conduite.
Le comportement de la phase aqueuse est légèrement différent.
La pression d'injection de la phase hydrocarbure liquide étant stabilisée au niveau de pression pₑ, en augmentant le débit q_{iw} de la phase aqueuse, on atteint une valeur de pression d'injection pₑ pour une valeur de débit d'injection q_{ws}. Toutefois, dans ce cas la pression d'injection ne se stabilise pas à la valeur pₑ et augmente jusqu'à une valeur p'ₑ pour un débit d'injection q'_{ws}.
L'écart entre les pressions p'ₑ et pₑ correspond dans ce cas à un effet de pression capillaire qui est d'autant plus important que la tension interfaciale entre les deux phases liquides, dans ce cas l'eau et la fraction hydrocarbure liquide, est élevée et que le diamètre des pores du revêtement poreux ou de la structure poreuse est petit.
Le débit q_{iw} est dans ce cas de préférence inférieur à q'_{ws} de manière à éviter l'envahissement du revêtement poreux 16 par le fluide circulant dans le revêtement poreux 15.

Le matériau qui constitue le revêtement poreux ou la structure poreuse de la conduite, peut présenter des caractéristiques variables selon sa longueur et/ou son épaisseur.
Il est possible de prévoir des structures de revêtement ou de conduite dont les pores ont des diamètres relativement faibles au voisinage de la surface interne du revêtement, c'est-à-dire la surface qui est la plus proche du fluide circulant dans la conduite et au contraire des diamètres relativement élevées pour les pores qui se trouvent au voisinage de la surface externe du revêtement ou les pores situés vers la paroi externe de la conduite.
Un tel choix permet notamment d'assurer une pression capillaire relativement élevée, favorisant ainsi la stabilité du fluide circulant à l'intérieur du revêtement poreux, tout en facilitant sa circulation à l'intérieur.
La figure 10 montre une autre variante de réalisation pour laquelle on dispose à l'intérieur de la conduite de transport 1, un tube poreux 30 dont le diamètre externe est inférieur au diamètre interne de la conduite 1. Une telle disposition crée un espace annulaire 31 par exemple entre la paroi interne de la conduite de transport 1 et la surface externe du tube poreux qui est par exemple utilisé pour faciliter la circulation du fluide retenu à l'intérieur du tube poreux.

Cet espace annulaire 31 peut aussi être utilisé pour faire circuler un deuxième fluide, par exemple une phase aqueuse, lorsque l'on fait circuler une phase hydrocarbure liquide à l'intérieur du tube poreux.

Selon un autre mode de réalisation, la conduite de transport est réalisée en matériau composite. Il peut s'agir par exemple d'une conduite flexible, dans ce cas, on utilise un matériau poreux qui est flexible, tel qu'un matériau polymère.

On peut aussi envisager l'application du procédé selon l'invention dans le cas d'une conduite sous-marine assurant la liaison entre le fond marin et la surface.

Selon un autre mode de mise en oeuvre de l'invention décrit à la figure 11, le procédé s'applique au transport des fluides à l'intérieur d'un puits de production 40.
Dans le cas d'un puits produisant du gaz avec une fraction condensat, les deux phases sont séparées au moyen par exemple d'un séparateur de fond 41. Le gaz remonte directement dans le puits et la fraction hydrocarbure liquide est envoyée par exemple par la pompe de fond 42 à travers le conduit 43 schématisé en pointillés vers le revêtement poreux 44 placé à l'intérieur du puits.
Le procédé s'applique pour tous les puits, quelque soit leur forme, ces derniers pouvant présenter des formes complexes, par exemple des parties ayant une direction sensiblement horizontale situées entre des parties verticales.

Une disposition analogue peut être utilisée pour le transport d'un gaz contenant de l'eau. Dans ce cas, on utilise par exemple deux revêtements poreux différents, l'un étant hydrophile et l'autre oléophile pour faire circuler la phase aqueuse et la phase hydrocarbure liquide respectivement dans le premier et le second revêtement, les deux phases ayant été séparées au préalable par exemple dans un séparateur de fond.

## Revendications

1. Procédé de transport d'un fluide (I) dans une conduite, **caractérisé en ce que** l'on injecte ledit fluide dans une conduite qui présente sur au moins une partie de sa longueur et/ou de son épaisseur une structure poreuse comportant des pores et un certain degré de porosité, et **en ce que** l'on injecte à l'intérieur desdits pores un deuxième fluide (II), ledit deuxième fluide étant retenu à l'intérieur desdits pores et au moins partiellement immiscible avec ledit fluide (I) transporté.

2. Procédé selon la revendication 1 **caractérisé en ce que** l'on injecte le fluide (I) à l'intérieur d'une conduite dont la structure poreuse comporte au moins un revêtement poreux disposé sur au moins une partie de sa longueur.

3. Procédé selon l'une des revendications 1 à 2 **caractérisé en ce que** l'on injecte ledit deuxième fluide (II) dans les pores à l'entrée de la conduite, avec un débit suffisant pour que la pression d'injection se stabilise à une valeur sensiblement voisine de la pression fluide (I) à l'entrée de la conduite.

4. Procédé selon l'une des revendications 1 à 3 **caractérisé en ce que** l'on injecte avec ledit second fluide (II), un ou plusieurs additifs anticorrosion et/ou antihydrates.

5. Procédé selon l'une des revendications 1 à 4 **caractérisé en ce que** l'on chauffe ledit second fluide (II) avant de l'injecter à l'intérieur de la structure poreuse.

6. Procédé selon l'une des revendications 2 à 5 **caractérisé en ce que** l'on dispose entre la paroi interne de la conduite et le revêtement poreux, au moins un revêtement isolant thermiquement.

7. Procédé selon l'une des revendications 1 à 6 **caractérisé en ce que** l'on utilise au moins deux structures poreuses présentant des valeurs de porosité différentes et on fait circuler à l'intérieur de chacun de ces structures poreuses, deux fluides de nature différentes, lesdits fluides étant au moins partiellement immiscibles.

8. Conduite (1) pour transporter au moins un fluide (I) **caractérisée en ce qu'**elle comporte une structure poreuse (3) au moins sur une partie de sa longueur et de son épaisseur, ladite structure poreuse (3) présentant un certain degré de porosité, permettant de retenir à l'intérieur desdits pores au moins un second fluide (II) qui est au moins partiellement immiscible avec ledit fluide (I) transporté.

9. Conduite de transport selon la revendication 8, **caractérisée en ce que** ladite structure poreuse (3) comporte un ou plusieurs revêtements poreux disposés sur la paroi interne (2) de la conduite (1) et à l'intérieur duquel ou desquels on fait circuler des fluides de nature différentes, lesdits fluides étant au moins partiellement immiscibles.

10. Conduite de transport selon l'une des revendications 8 et 9, **caractérisée en ce que** les pores situés au voisinage de la surface interne de la structure poreuse de la conduite ou de la surface interne (S) du revêtement poreux ont un diamètre inférieur à 10 microns.

11. Conduite de transport selon l'une des revendications 8 et 10, **caractérisée en ce que** la structure poreuse est mouillable par le fluide (II).

12. Conduite de transport selon la revendication 9, **caractérisée en ce qu'**elle comporte au moins un revêtement interne isolant thermiquement.

13. Conduite de transport selon la revendication 8, **caractérisée en ce qu'**elle comporte au moins un tube poreux (30) placé à l'intérieur de ladite conduite (1) de manière à former un espace annulaire (31) délimité par la surface interne (2) de la paroi de la conduite et par la surface externe dudit tube poreux (30).

14. Application du procédé selon l'une des revendications 1 à 7 et de la conduite selon l'une des revendications 8 à 13 pour transporter un gaz naturel sous pression et/ou un pétrole brut.

## Patentansprüche

1. Verfahren zum Transport eines Fluids (I) in einer Leitung, **dadurch gekennzeichnet, dass** man dieses Fluid in eine Leitung, die über wenigstens einen Teil ihrer Länge und/oder ihrer Dicke eine poröse Struktur mit Poren und einem gewissen Porositätsgrad aufweist, einführt oder injiziert und dass man in das Innere dieser Poren ein zweites Fluid (II) einführt oder injiziert, wobei dieses zweite Fluid im Inneren dieser Poren zurückgehalten wird und wenigstens teilweise mit diesem ersten transportierten Fluid (I) nicht mischbar ist.

2. Verfahren nach Anspruch 1, **dadurch gekennzeichnet, dass** man das Fluid (I) in das Innere einer Leitung einführt oder injiziert, deren poröse Struktur wenigstens eine poröse Auskleidung umfasst, die über wenigstens einen Teil ihrer Länge angebracht ist.

3. Verfahren nach einem der Ansprüche 1 bis 2, **dadurch gekennzeichnet, dass** man dieses zweite Fluid (II) in die Poren am Eintritt der Leitung in ausreichender Menge einführt, damit der Injektions- oder Einführungsdruck sich auf einen Wert stabilisiert, der im Wesentlichen benachbart dem Fluiddruck (I) am Eintritt der Leitung ist.

4. Verfahren nach einem der Ansprüche 1 bis 3, **dadurch gekennzeichnet, dass** man mit diesem zweiten Fluid (II) eines oder mehrere an die Korrosionsund/oder Antihydratadditive einführt.

5. Verfahren nach einem der Ansprüche 1 bis 4, **dadurch gekennzeichnet; dass** man das zweite Fluid (II) erwärmt, bevor es in das Innere der porösen Struktur eingeführt wird.

6. Verfahren nach einem der Ansprüche 2 bis 5, **dadurch gekennzeichnet, dass** man zwischen der Innenwand der Leitung und der porösen Auskleidung wenigstens eine thermisch isolierende Auskleidung anbringt.

7. Verfahren nach einem der Ansprüche 1 bis 6, **dadurch gekennzeichnet, dass** man wenigstens zwei poröse Strukturen verwendet, welche unterschiedliche Porositätswerte aufweisen und man im Inneren jeder der porösen Strukturen zwei Fluide unterschiedlicher Art strömen lässt, wobei diese Fluide wenigstens teilweise nicht mischbar sind.

8. Leitung (1) zum Transportieren wenigstens eines Fluids (I), **dadurch gekennzeichnet, dass** sie eine poröse Struktur (3) über wenigstens einen Teil ihrer Länge und ihrer Dicke aufweist, wobei die poröse Struktur (3) einen gewissen Porositätsgrad zeitigt, der es ermöglicht, im Inneren dieser Poren wenigstens ein zweites Fluid (II) zurückzuhalten, welches wenigstens teilweise mit diesem transportierten Fluid (I) nicht mischbar ist.

9. Transportleitung nach Anspruch 8, **dadurch gekennzeichnet, dass** diese poröse Struktur (3) wenigstens einen oder mehrere poröse Überzüge umfasst, die auf der Innenwandung (2) der Leitung (1) angeordnet sind und in deren Innerem man Fluide unterschiedlicher Art strömen lässt, wobei diese Fluide wenigstens teilweise nicht mischbar sind.

10. Transportleitung nach einem der Ansprüche 8 und 9, **dadurch gekennzeichnet, dass** die benachbart der Innenfläche der porösen Struktur der Leitung oder der Innenfläche (S) der porösen Auskleidung angeordneten Poren einen Durchmesser von weniger als 10 Mikron haben.

11. Transportleitung nach einem der Ansprüche 8 und 10, **dadurch gekennzeichnet, dass** die poröse Struktur durch das Fluid (II) benetzbar ist.

12. Transportleitung nach Anspruch 9, **dadurch gekennzeichnet, dass** sie wenigstens eine thermisch isolierende Innenauskleidung umfasst.

13. Transportleitung nach Anspruch 8, **dadurch gekennzeichnet, dass** sie wenigstens ein poröses Rohr (30) umfasst, das im Inneren dieser Leitung (1) derart angeordnet ist, dass ein Ringraum (31) gebildet wird, der durch die Innenfläche (2) der Wandung der Leitung und durch die Außenfläche dieses porösen Rohres (30) begrenzt ist.

14. Anwendung des Verfahrens nach einem der Ansprüche 1 bis 7 und der Leitung nach einem der Ansprüche 8 bis 13 zum Transportieren eines Erdgases unter Druck und/oder eines rohen Erdöls.

## Claims

1. A method of transporting a fluid (I) in a pipeline, **characterised in that** said fluid is injected into a pipe which has over at least a portion of its length and/or thickness a porous structure having pores and being of a certain degree of porosity and a second fluid (II) is injected into said pores, said second fluid being retained inside said pores and being at least partially immiscible with said fluid (I) being transported.

2. A method as claimed in claim 1, **characterised in that** the fluid (I) is injected through a pipe, the porous structure of which is at least one porous lining arranged over at least a portion of its length.

3. A method as claimed in one of claims 1 to 2, **characterised in that** said second fluid (II) is injected into the pores at the pipe inlet at a sufficient rate to ensure that the injection pressure stabilises at a value essentially close to the fluid (I) pressure at the inlet of the pipe.

4. A method as claimed in one of claims 1 to 3, **characterised in that** one or more anti-corrosion additives and/or anti-hydrate additives is injected with the second fluid (II).

5. A method as claimed in one of claims 1 to 4, **characterised in that** said second fluid (II) is heated before it is injected into the porous structure.

6. A method as claimed in one of claims 2 to 5, **characterised in that** at least one heat insulation lining is inserted between the internal wall of the pipe and the porous lining.

7. A method as claimed in one of claims 1 to 6, **characterised in that** at least two porous structures of differing porosity values are used and two fluids of differing natures are circulated through these respective porous structures, said fluids being at least partially immiscible.

8. A pipe (1) for conveying at least one fluid (I) **characterised in that** it has a porous structure (3) over at least a portion of its length and its thickness, said porous structure (3) having a certain degree of porosity enabling at least a second fluid (II) which is at least partially immiscible with said fluid (I) being transported to be retained in said pores.

9. A transport pipe as claimed in claim 8, **characterised in that** said porous structure (3) has one or more porous linings arranged on the internal wall (2) of the pipe (1) and inside which the fluids of differing natures are circulated, said fluids being at least partially immiscible.

10. A transport pipe as claimed in one of claims 8 and 9, **characterised in that** the pores located close to the internal surface of the porous structure of the pipe or the internal surface (S) of the porous lining are of a diameter of less than 10 microns.

11. A transport pipe as claimed in one of claims 8 and 10, **characterised in that** the porous structure is wettable by the fluid (II).

12. A transport pipe as claimed in claim 9, **characterised in that** it has at least one internal heat insulation lining.

13. A transport pipe as claimed in claim 8, **characterised in that** it has at least one porous tube (30) inserted inside said pipe (1) so as to form an annular space (31) delineated by the internal surface (2) of the pipe wall and the external surface of said porous tube (30) .

14. Application of the method as claimed in one of claims 1 to 7 and of the pipe as claimed in one of claims 8 to 13, to the transportation of a compressed natural gas and/or a petroleum crude.
